# EUROPEAN PATENT APPLICATION

(11) **EP 4 537 930 A1**
(43) Date of publication of application: **16.04.2025**
(21) Application number: 23819420.3
(22) Date of filing: 18.01.2023
(51) Int. Cl.: B01J 19/00, B01J 19/20

(54) **EXTRACTION DEVICE AND EXTRACTION METHOD FOR REACTOR DEVICE**

(30) Priority: 10.06.2022 JP 2022094429
(71) Applicant: The Japan Steel Works, Ltd., Tokyo 141-0032 (JP)
(72) Inventor: HIRAMATSU, Seiya, Tokyo 141-0032 (JP); UEDA, Naoki, Tokyo 141-0032 (JP); NAKAMURA, Satoru, Tokyo 141-0032 (JP); FURUKI, Kenichi, Tokyo 141-0032 (JP)
(74) Representative: Simmons & Simmons LLP (Munich)
(86) International application number: PCT/JP2023/001247
(87) International publication number: WO 2023/238432

(57) **Abstract**

To safely take out a conveyance mechanism provided in a reaction vessel. A take-out apparatus (30) according to the present disclosure takes out a conveyance mechanism (13) from a reaction apparatus (10) including a reaction vessel (11) and the conveyance mechanism (13), the reaction vessel (11) obtaining a product by causing a reaction of a substance to be treated that is charged into the reaction vessel (11), the conveyance mechanism (13) being provided in the reaction vessel (11) to convey the substance to be treated. The take-out apparatus (30) includes a housing vessel (31) hermetically coupled to the reaction vessel (11), and a coupling member (32) to be coupled to the conveyance mechanism (13) in the housing vessel (31), and the conveyance mechanism (13) is taken out from the reaction vessel (11) by moving the coupling member (32), and is housed in the housing vessel (31).

## Description

### Technical Field

The present invention relates to a take-out apparatus and a take-out method with respect to a reaction apparatus.

### Background Art

There are reaction apparatuses that produce a desired product by applying a predetermined atmosphere to a powdery and granular substance to be treated. Patent Literature 1, for example, discloses a reaction apparatus including a screw feeder body, a catalyst supply part, and a lower hydrocarbon supply part, the screw feeder body forming a pressure reaction vessel, the catalyst supply part introducing a catalyst into the screw feeder body, the lower hydrocarbon supply part introducing a lower hydrocarbon into the screw feeder body.

This reaction apparatus includes a screw, a solid delivering part, and a gas delivering part, the screw transferring the catalyst and nanocarbon created by thermal decomposition of lower hydrocarbon, the solid delivering part delivering the catalyst and nanocarbon which are transferred by the screw, the gas delivering part delivering created hydrogen to the outside of the feeder body. In this reaction apparatus, nanocarbon growing with time is continuously discharged to the outside of the reaction vessel together with the used catalyst, and an unused catalyst of the same amount as the used catalyst is supplied, thus continuously causing reaction.

### Citation List

### Patent Literature

[Patent Literature 1]
Japanese Unexamined Patent Application Publication No. 2006-290682

### Summary of Invention

Such a reaction apparatus, in which a conveyance mechanism that conveys a product is provided in a reaction vessel, may be used to produce a product having high reactivity. An example of the product having high reactivity is a battery material which constitutes an all-solid lithium ion battery. The battery material may be, for example, a solid electrolyte or a positive electrode active material that at least partially contains sulfur and lithium as constituents. The battery material may be, for example, a negative electrode material that at least partially contains metallic lithium as a constituent. Meanwhile, it is known that these battery materials have high reactivity. For example, the solid electrolyte and the positive electrode active material that at least partially contain sulfur and lithium as constituents may react with moisture in the ambient air to generate toxic hydrogen sulfide.

The negative electrode material that at least partially contains metallic lithium as a constituent may react with moisture or oxygen in the ambient air, thus causing ignition or degradation. In view of such circumstances, in producing a battery material having high reactivity on an experimental basis in a laboratory or the like, a glove box the atmosphere of which is regulated is used. For example, the inside of the glove box is an environment in which the dew point temperature is regulated to -60 degrees Celsius or less, so that the amount of moisture in air is extremely small. In addition, the inside of the glove box is regulated to be an environment having an extremely low oxygen concentration by using an inert gas, such as nitrogen or argon.

To achieve mass production of such a battery material having high reactivity, inventors developed a reaction apparatus by further improving the reaction apparatus described in Patent Literature 1. Meanwhile, after a battery material having high reactivity is produced, a conveyance mechanism may be taken out from the reaction apparatus to perform maintenance. However, when the conveyance mechanism is taken out in the ambient air, a battery material adhering to the conveyance mechanism reacts with moisture or oxygen in the ambient air and hence, it has been difficult to safely take out the conveyance mechanism.

The present disclosure has been made to solve such a problem, and provides a take-out apparatus and a take-out method that can safely take out a conveyance mechanism provided in a reaction vessel.

A take-out apparatus according to the present disclosure is a take-out apparatus that takes out a conveyance mechanism from a reaction apparatus including a reaction vessel and the conveyance mechanism, the reaction vessel obtaining a product by causing a reaction of a substance to be treated that is charged into the reaction vessel, the conveyance mechanism being provided in the reaction vessel to convey the substance to be treated, the take-out apparatus including: a housing vessel hermetically coupled to the reaction vessel; and a coupling member to be coupled to the conveyance mechanism in the housing vessel, in which the conveyance mechanism is taken out from the reaction vessel by moving the coupling member, and is housed in the housing vessel.

A take-out method according to the present disclosure is a take-out method for taking out a conveyance mechanism from a reaction apparatus including a reaction vessel and the conveyance mechanism, the reaction vessel obtaining a product by causing a reaction of a substance to be treated that is charged into the reaction vessel, the conveyance mechanism being provided in the reaction vessel to convey the substance to be treated, the method including the steps of: hermetically coupling a housing vessel to the reaction vessel; coupling a coupling member to the conveyance mechanism in the housing vessel; and taking out the conveyance mechanism from the reaction vessel by moving the coupling member, and housing the conveyance mechanism into the housing vessel.

According to the present disclosure, it is possible to safely take out the conveyance mechanism provided in the reaction vessel.

### Brief Description of Drawings

Fig. 1 is a diagram illustrating an example of the configuration of a reaction apparatus to which a take-out apparatus of an embodiment is applied;
Fig. 2 is a function block diagram of a control apparatus that controls the reaction apparatus to which the take-out apparatus according to an embodiment 1 is attached;
Fig. 3 is a diagram showing a state in which the take-out apparatus according to the embodiment 1 is attached to a reaction vessel;
Fig. 4 is a flowchart illustrating a take-out method according to the embodiment 1;
Fig. 5A is a process diagram illustrating the take-out method according to the embodiment 1;
Fig. 5B is a process diagram illustrating the take-out method according to the embodiment 1;
Fig. 5C is a process diagram illustrating the take-out method according to the embodiment 1;
Fig. 5D is a process diagram illustrating the take-out method according to the embodiment 1;
Fig. 5E is a process diagram illustrating the take-out method according to the embodiment 1;
Fig. 5F is a process diagram illustrating the take-out method according to the embodiment 1;
Fig. 6 is a diagram showing a state in which a take-out apparatus according to an embodiment 2 is attached to a reaction vessel;
Fig. 7 is a diagram illustrating another example of the configuration of a reaction apparatus to which the take-out apparatus of the embodiment is applied;
Fig. 8 is a diagram showing a state in which the take-out apparatus according to the embodiment 1 is attached to a reaction vessel shown in Fig. 7; and
Fig. 9 is a cross-sectional view of a bearing shown in Fig. 7 taken along line IX-IX.

### Description of Embodiments

Hereinafter, the present invention will be described through embodiments of the invention. However, the invention according to the scope of claims is not limited to the following embodiments. Not all the components described in the embodiments are essential as a means for solving problems. To clarify the description, the description and drawings below are suitably omitted or simplified. In the respective drawings, the same elements are given the same reference symbols, and the repeated description are omitted when appropriate. In the description made hereinafter, positional relationships indicated by terms, such as "left", "right", "inside", "outside", "axis", "center", "horizontal", and "orthogonal" are based on positional relationships shown in the drawings, and are merely intended to facilitate description of the embodiments of the present invention, and thus should not be understood as limiting the embodiments of the present invention.

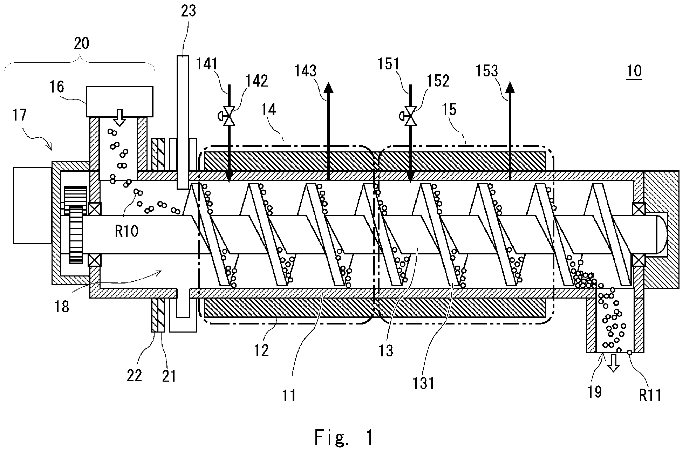

First, a description will be made for a reaction apparatus to which a take-out apparatus of an embodiment is applied. Fig. 1 is a diagram illustrating an example of the configuration of a reaction apparatus 10 to which the take-out apparatus of the embodiment is applied. Fig. 1 is a side view of the reaction apparatus 10, and shows a state of the reaction apparatus 10 with a partial cut-away to facilitate understanding.

The reaction apparatus 10 is, for example, an apparatus for producing a product by applying conditions, such as predetermined physical stimulation, to a substance to be treated. Although the kind or the state of a substance to be treated is not particularly limited, the substance to be treated may be an inorganic substance in which lithium is contained as one of constituents, such as a metal oxide or a metal sulfide, or may be an organic substance, such as a hydrocarbon. The substance to be treated may be a solid, such as a powdery and granular material, or may be a fluid, such as a liquid or a gas. In the process of conversion to a product, the substance to be treated may be converted to the product via an intermediate substance. Although the mode or the state of the intermediate substance is not particularly limited, the intermediate substance may be, for example, a product from each reaction in the case of performing two or more reactions in a stepwise manner. In such a case, the intermediate substance is, for example, an anhydride compound created by heating a hydrated compound. Alternatively, the intermediate substance is a fired body in which at least a portion of a substance to be treated is grain grown or fired. The intermediate substance is in a state in which at least a portion of the substance to be treated is liquefied or vaporized. The intermediate substance may be in a mode or a state other than the above.

Physical stimulation is not particularly limited provided that the physical stimulation is a means used in a process of converting a substance to be treated into a product. Examples of the physical stimulation include temperature changes, such as heating and cooling. Examples of the physical stimulation include stress transmissions, such as stirring, mixing, kneading, and grinding. Physical stimulation is, for example a reaction that receives electrons or radicals. Physical stimulation is, for example, contact with a catalyst.

The kind or the state of the product is not particularly limited, and the product may be a solid, such as a powdery and granular material, or may be a fluid, such as a liquid or a gas. Alternately, the product may be a mixture containing a material different from the product, such as a catalyst or a conveyance auxiliary material. The product may be a mixture containing two or more compounds, such as a main product and a byproduct.

The take-out apparatus of the embodiment is particularly effectively used in a case in which the reaction apparatus 10 produces, for example, a product having high reactivity, such as sulfide-based solid electrolyte being a material of an all-solid lithium ion battery.

The reaction apparatus 10 includes, as main components, a reaction vessel 11, a temperature control region 12, a conveyance mechanism 13, a first fluid control region 14, a second fluid control region 15, a supply apparatus 16, and a drive apparatus 17. The reaction vessel 11 is a cylindrical member including a supply port 18 and a delivery port 19, the supply port 18 receiving a substance to be treated that is supplied, the delivery port 19 delivering a product. The reaction vessel 11 includes an intermediate part between the supply port 18 and the delivery port 19.

The number of supply ports 18 may be one, or may be two or more. The delivery port 19 may be provided in the vicinity of the end portion of the reaction vessel 11, or may be provided at a place different from the vicinity of the end portion of the reaction vessel 11. The delivery port 19 may be provided between two supply ports 18.

In a process of obtaining a product from a substance to be treated, the number of reaction apparatuses 10 may be one, or may be two or more. That is, to cause a plurality of reactions, a plurality of reaction apparatuses 10 may be coupled in series or in parallel.

The reaction vessel 11 shown in Fig. 1 receives a substance to be treated R10 from the supply port 18. The reaction apparatus 10 conveys the substance to be treated R10 received by the reaction vessel 11 toward the delivery port 19 by the conveyance mechanism 13 provided in the reaction vessel 11. That is, the substance to be treated R10 supplied to the reaction vessel 11 passes through the intermediate part, and moves toward the delivery port 19. The reaction apparatus 10 produces a product R11 from a raw material R10 by causing the substance to be treated R10 to pass through the intermediate part of the reaction vessel 11. Then, the conveyance mechanism 13 delivers the produced product R11 from the delivery port 19.

Although a material used for forming the reaction vessel 11 is not particularly limited, it is desirable to form the reaction vessel 11 from a material that allows temperature changes occurring in producing a product, and that allows contact with a substance supplied into the vessel. The reaction vessel 11 may be formed from, for example, alloy, ceramic, carbon, or a composite material containing two or more of the above. An alloy is a metallic material that contains, as a constituent, at least one of alloy elements including nickel, cobalt, chromium, molybdenum, tungsten, tantalum, titanium, iron, copper, aluminum, silicon, boron, carbon, and the like. A ceramic is a ceramic material, including an oxide, such as an alumina or a zirconia, a carbide, such as a silicon carbide or a titanium carbide, a nitride, such as a silicon nitride or a titanium nitride, or a boride, such as a chromium boride. A carbon is a carbon material, such as crystalline graphite or fiber-reinforced graphite.

The shape and a conveyance method of the conveyance mechanism 13 is not limited provided that the conveyance mechanism 13 can convey a substance to be treated and a product. The conveyance mechanism 13 may be a screw provided in the reaction vessel 11 in such a way as to extend from the supply port side to the delivery port side of the reaction vessel 11. The conveyance mechanism 13 may be a rotary drum provided in the reaction vessel 11 in such a way as to extend from the supply port side to the delivery port side of the reaction vessel 11. The conveyance mechanism 13 may be a belt conveyor provided in the reaction vessel 11 in such a way as to extend from the supply port side to the delivery port side of the reaction vessel 11. The conveyance mechanism 13 may be a blowing apparatus provided in the reaction vessel 11. The conveyance mechanism 13 may be a vibration generating apparatus provided in the reaction vessel 11. The conveyance mechanism 13 may be an apparatus different from the above-mentioned apparatuses.

The size of the conveyance mechanism 13 is not particularly limited, and may be shorter than the entire length of the reaction vessel 11, for example. Although a material used for forming the conveyance mechanism 13 is not particularly limited, in the same manner as the reaction vessel 11, it is desirable to form the conveyance mechanism 13 from a material that allows temperature changes occurring in producing a product, and that allows contact with a substance supplied into the vessel. The conveyance mechanism 13 may be formed from, for example alloy, ceramic, carbon, or a composite material containing two or more of the above.

The conveyance mechanism 13 shown in Fig. 1 is a screw, for example, and is pivotally supported at both end portions of the reaction vessel 11. Positions at which the conveyance mechanism 13 is supported are not limited to both end portions. The conveyance mechanism 13 is connected to the drive apparatus 17 on the supply port 18 side. The drive apparatus 17 includes a predetermined rotating mechanism, such as a motor, and rotates the conveyance mechanism 13. The drive apparatus 17 may be set to be able to change the conveying speed of the conveyance mechanism 13. In this case, the drive apparatus 17 may be a motor in which the rotation speed is variable, or may be an apparatus obtained by combining a motor having a constant rotation speed and a reducer in which the reduction gear ratio is variable.

In Fig. 1, when the screw is rotated, the substance to be treated R10 supplied from the supply port 18 is conveyed toward the delivery port 19. In the example shown in Fig. 1, a protruding part 131 having a helical shape is formed on the periphery of the shaft of the conveyance mechanism 13, the shaft extending in the left-right direction in Fig. 1. Due to rotation and contact of this protruding part 131 with the substance to be treated R10, the conveyance mechanism 13 conveys the substance to be treated R10 from the left side to the right side in Fig. 1.

The cross sectional shape of each of the reaction vessel 11 and the conveyance mechanism 13 in a plane orthogonal to the shaft of the conveyance mechanism 13 may be a shape having a combination defined by a Reuleaux constant-width figure. In this case, the cross sectional shape of the protruding part 131 of the conveyance mechanism 13 may be a shape obtained by combining a plurality of arcs corresponding to a Reuleaux constant-width figure. For example, in the case in which the cross sectional shape of the reaction vessel 11 is a circular shape, the cross sectional shape of the conveyance mechanism 13 may be a Reuleaux constant-width figure constituted of three arcs.

The shape of the protruding part 131 shown in Fig. 1 is merely an example, and the shape of the protruding part 131 is not limited to such a shape. The protruding part 131 may have different shapes for respective regions in the reaction vessel 11. For example, the pitch of the helix of the protruding part 131 may change for respective regions in the reaction vessel 11. The helical shape of the protruding part 131 is not necessarily a single helix, and may be a double helix or more. The protruding part 131 may include a portion not having a helical shape. Consequently, the reaction apparatus 10 can set a moving speed, behavior at the time of movement, and the like of an object present in the reaction vessel 11 for respective regions. The conveyance mechanism 13 has not only a function of conveying an object in the reaction vessel 11, but also at least one of functions of stirring, mixing, kneading, grinding, and the like.

The temperature control region 12 includes a temperature control apparatus, that is, a heating apparatus or a cooling apparatus, and controls the temperature of the reaction vessel 11 at a predetermined position in the intermediate part disposed between the supply port 18 and the delivery port 19. The temperature control region 12 shown in Fig. 1 includes the heating apparatus at the intermediate part of the reaction vessel 11, the heating apparatus surrounding the periphery of the reaction vessel 11 having a cylindrical shape. Examples of the heating apparatus include arbitrary heaters the temperature of which is controllable, such as a sheath heater, a coil heater, and a ceramic heater. The heating apparatus performs heating within a range from ambient temperature to approximately 900 degrees, for example. The temperature control region 12 can set different temperatures for regions of the intermediate part of the reaction vessel 11 along the conveying direction of the conveyance mechanism 13 described later. The temperature control region 12 can control a temperature change applied to the substance to be treated R10 in the first fluid control region 14 and in the second fluid control region 15 described later.

The temperature control region 12 may also include a temperature control unit that controls the heating apparatus or the cooling apparatus. For example, the temperature control region 12 may include, at a predetermined position in the reaction vessel 11, a temperature sensor that monitors a temperature, such as a thermocouple, a thermistor, a radiation thermometer, or the like. In a case in which the heating apparatus has, for example, the principle in which heating is achieved by a current flow, the reaction vessel 11 may perform temperature control by monitoring current values, power values, or the like.

The temperature control region 12 may have a configuration in which heating or cooling is achieved by circulating water, oil, or the like. The temperature control region 12 may have a configuration in which cooling is achieved by using a Peltier element, a blower, or the like. With the configuration described above, the temperature control region 12 can set various temperature distributions in the reaction vessel 11 along the conveying direction of the conveyance mechanism 13.

The first fluid control region 14 is provided in the reaction vessel 11 at a position between the supply port 18 and the second fluid control region 15. The first fluid control region 14 has a configuration that causes, in a predetermined region in the intermediate part, a first fluid to pass through the reaction vessel 11. The first fluid control region 14 includes, for example, a first fluid supply pipe 141, a first valve 142, and a first fluid discharge pipe 143. The first fluid supply pipe 141 supplies the first fluid to the reaction vessel 11. The first valve 142 adjusts the flow rate of the first fluid to be supplied from the first fluid supply pipe 141. The first fluid discharge pipe 143 discharges a fluid in the first fluid control region 14 to the outside of the reaction vessel 11.

With the configuration described above, the reaction apparatus 10 creates an intermediate substance by causing the substance to be treated R10 to react with the first fluid in the first fluid control region 14. In the reaction apparatus 10, the conveyance mechanism 13 is driven to convey the substance to be treated R10, thus further causing the substance to be treated R10 to come into contact with the first fluid, and hence it is possible to promote reaction caused by the first fluid. The reaction apparatus 10 discharges a post-reaction fluid to the outside of the first fluid control region 14. The state and the mode of the first fluid are not limited provided that the first fluid has fluidity. That is, the first fluid may be a gas, may be a liquid, or may be a slurry in which a powdery and granular material or the like is dispersed in a liquid. One kind of constituent may be used, or two or more kinds of constituent may be used to constitute the first fluid. That is, the first fluid may be a mixed gas of hydrogen sulfide, hydrogen, and argon.

The second fluid control region 15 is provided in the reaction vessel 11 at a position between the first fluid control region 14 and the delivery port 19. The second fluid control region 15 has a configuration that causes, in a region different from the first fluid control region 14 in the intermediate part, a second fluid to pass through the reaction vessel 11. The second fluid control region 15 includes, for example, a second fluid supply pipe 151, a second valve 152, and a second fluid discharge pipe 153. The second fluid supply pipe 151 supplies the second fluid to the reaction vessel 11. The second valve 152 adjusts the flow rate of the second fluid to be supplied from the second fluid supply pipe 151. The second fluid discharge pipe 153 discharges the fluid in the second fluid control region 15 to the outside of the reaction vessel 11. The state and the mode of the second fluid are not limited provided that the second fluid has fluidity. That is, the second fluid may be a gas, may be a liquid, or may be a slurry in which a powdery and granular material or the like is dispersed in a liquid. One kind of constituent may be used, or two or more kinds of constituent may be used to constitute the second fluid. That is, the second fluid may be a mixed gas of hydrogen sulfide and nitrogen.

With the configuration described above, the reaction apparatus 10 creates, in the second fluid control region 15, the product R11 by causing a reaction, with the second fluid, of an intermediate substance that has passed through the first fluid control region 14. In the reaction apparatus 10, the conveyance mechanism 13 is driven to convey the intermediate substance, thus further causing the intermediate substance to come into contact with the second fluid and hence, it is possible to promote reaction caused by the second fluid. The reaction apparatus 10 discharges the post-reaction fluid to the outside of the second fluid control region 15.

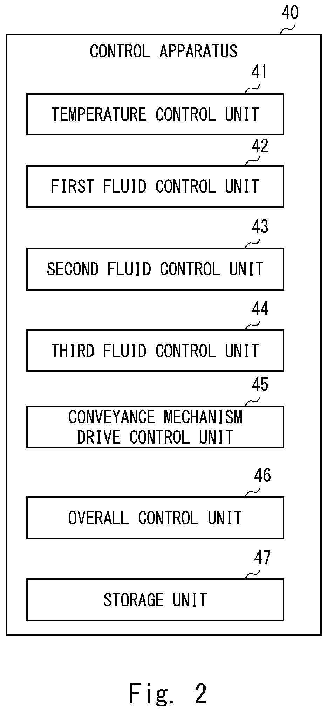

The reaction apparatus 10 includes a control apparatus that controls the respective constitutional elements shown in Fig. 1. Fig. 2 is a function block diagram of a control apparatus 40 for the reaction apparatus 10 to which a take-out apparatus 30 according to the embodiment is attached. As shown in Fig. 2, the control apparatus 40 includes a temperature control unit 41, a first fluid control unit 42, a second fluid control unit 43, a third fluid control unit 44, a conveyance mechanism drive control unit 45, an overall control unit 46, and a storage unit 47.

Each of the respective constitutional elements of the control apparatus 40 may be achieved by dedicated hardware. Some or all of the respective constitutional elements may be achieved by a general-purpose or dedicated circuit, a processor, or the like, or a combination of the above. Some or all of the respective constitutional elements of each apparatus may be achieved by a combination of the circuit described above or the like and a program. For the processor, a CPU (Central Processing Unit), a GPU (Graphics Processing Unit), an FPGA (Field-Programmable Gate Array), or the like may be used.

The temperature control unit 41 controls the temperature of the reaction vessel 11 in the temperature control region 12. The temperature control unit 41 heats, keeps a constant temperature of, or cools the reaction vessel 11 by the temperature control apparatus described above according to, for example, an output from one or more temperature sensors (not shown in the drawing) provided for controlling a temperature.

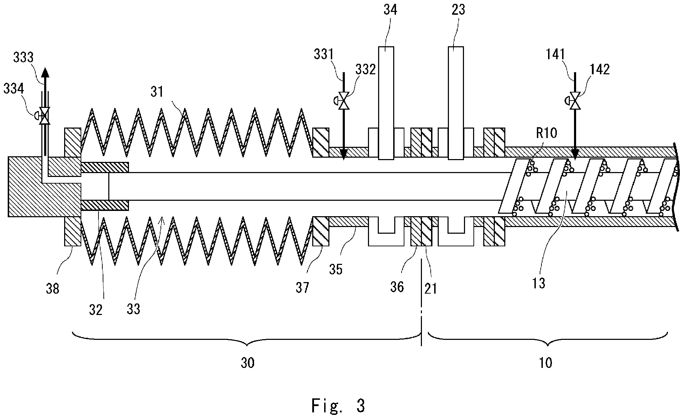

Fig. 3 is a diagram showing a state in which the take-out apparatus according to an embodiment 1 is attached to the reaction vessel. The first fluid control unit 42 controls the flow of the first fluid in the first fluid control region 14. The first fluid control unit 42 includes control of the first valve 142, which pressure-feeds the first fluid. The second fluid control unit 43 controls the flow of the second fluid in the second fluid control region 15. The second fluid control unit 43 includes control of the second valve 152, which pressure-feeds the second fluid. The third fluid control unit 44 controls the flow of a third fluid in a third fluid control region 33 in a housing vessel 31, which forms the take-out apparatus 30 described later. The third fluid control unit 44 includes control of an inflow valve 332, which allows the third fluid to flow, and control of a discharge valve 334. The take-out apparatus 30 will be described later in detail.

The conveyance mechanism drive control unit 45 controls the action of the drive apparatus 17. The conveyance mechanism drive control unit 45 drives the motor of the drive apparatus 17 according to, for example, an output from a rotation sensor (not shown in the drawing) that monitors the rotation speed of the motor. The overall control unit 46 may perform an overall action obtained by connecting respective functions, such as giving instructions for an action to the conveyance mechanism drive control unit 45 according to the temperature of the reaction vessel 11 which is sent from the temperature control unit 41, for example.

The storage unit 47 stores programs that allow the reaction apparatus 10 to achieve the respective functions described above. The storage unit 47 may include a nonvolatile memory, such as a flash memory, an SSD (Solid State Drive), or the like. The storage unit 47 may also include an information input/output part (not shown in the drawing), which receives operation performed by the user, such as a button, a switch, a touch panel, or the like. The information input/output part may include a display apparatus or the like that presents information to the user.

The configuration of the reaction apparatus 10 is not limited to the configuration described above. For example, two or more conveyance mechanisms 13 may be provided. That is, the reaction apparatus 10 may include a plurality of conveyance mechanisms 13 disposed in parallel. The reaction vessel 11 is not limited to a disposition in which the center axis thereof extends in the horizontal direction, and the reaction vessel 11 may be inclined with respect to the horizontal direction at a predetermined angle. Although the reaction apparatus 10 includes the first fluid control region 14 and the second fluid control region 15 in the intermediate part, the reaction apparatus 10 may further have a configuration that allows another fluid to pass therethrough. That is, the reaction apparatus 10 may include three or more fluid control regions. Note that less than two fluid control regions may be provided, or no fluid control region may be provided.

Different from the description above, the conveyance mechanism 13 need not be a screw, and another means may be used provided that the means can convey a substance to be treated from the supply port 18 toward the delivery port 19.

In the example shown in Fig. 1, the reaction vessel 11 is disposed such that the center axis thereof extends in the horizontal direction, and the reaction vessel 11 has the supply port 18 and the delivery port 19. A supply/drive unit 20 including the supply apparatus 16 and the drive apparatus 17 is connected to the supply port 18 side in a removable manner, the supply apparatus 16 supplying a substance to be treated, the drive apparatus 17 driving the conveyance mechanism 13.

A flange 21 is provided to the outer periphery of the reaction vessel 11 at a position close to the supply port 18 side. A flange 22 is provided to the outer periphery of the supply/drive unit 20 on a side facing the supply port 18. A plurality of bolt holes (not shown in the drawing) are provided to each of the flange 21 and the flange 22 at predetermined intervals in the circumferential direction. By screwing bolts not shown in the drawing into these bolt holes, the supply/drive unit 20 can be connected to the reaction vessel 11. It is desirable that a sealing means that suppresses intrusion of outside air, such as an O ring made of rubber, be further provided between the flange 21 and the flange 22. However, a method for connecting the reaction vessel 11 and the supply/drive unit 20 to each other is not limited to such a method.

A partition 23 is provided between the flange 21 and the temperature control region 12 of the reaction vessel 11. The partition 23 is movable in a direction orthogonal to the center axis of the reaction vessel 11. By closing the partition 23, the space in the reaction vessel 11 is shut off from the space outside the reaction vessel 11. That is, by closing the partition 23, a substance present outside the reaction vessel 11 is prevented from intruding into the reaction vessel 11. Alternatively, by closing the partition 23, a toxic substance present in the reaction vessel 11 is prevented from being released to the outside of the reaction vessel 11.

The kind of a substance present outside the reaction vessel 11 is not limited provided that the substance may react with a product or the like remaining in the reaction vessel 11, and thus generating a toxic substance. The substance present outside the reaction vessel 11 may be ambient air, may be oxygen, or may be water vapor, for example. The substance present outside the reaction vessel 11 may be a liquid, such as water, or may be a solid, such as potassium permanganate, for example. The take-out apparatus 30 according to the embodiment is used to take out the conveyance mechanism 13 from such a reaction vessel 11. A place where the partition 23 is provided is not particularly limited, and the partition 23 may be provided at a place different from the place between the flange 21 and the temperature control region 12 of the reaction vessel 11. Hereinafter, the take-out apparatus 30 according to the embodiment will be described.

### <Embodiment 1>

The configuration of the take-out apparatus according to the embodiment 1 will be described with reference to Fig. 3. Fig. 3 is a diagram showing a state in which the take-out apparatus 30 is attached to the reaction vessel 11. In Fig. 3, the right side of a chain line shows the configuration of the reaction apparatus 10 in a state in which the supply/drive unit 20 is removed, and the left side of the chain line shows the configuration of the take-out apparatus 30.

As shown in Fig. 3, the take-out apparatus 30 includes, as main components, the housing vessel 31, a coupling member 32, the third fluid control region 33, and a partition 34. The third fluid control region 33 includes a third fluid supply pipe 331, the inflow valve 332, a third fluid discharge pipe 333, and the discharge valve 334. The housing vessel 31 is hermetically coupled to the supply port 18 side of the reaction vessel 11. In the example shown in Fig. 3, a flange 37 is provided to the housing vessel 31 on a side facing the supply port 18 of the reaction vessel 11, and a sealing part 38 is provided to the housing vessel 31 on the opposite side. A cylindrical part 35 is integrally formed with the flange 37 in such a way as to extend toward the reaction vessel 11.

A flange 36 is provided to the outer periphery of the cylindrical part 35. The flange 36 has bolt holes at positions corresponding to the plurality of bolt holes of the flange 21. By screwing bolts not shown in the drawing into the bolt holes of the flange 21 and the bolt holes of the flange 36, the take-out apparatus 30 can be coupled to the reaction vessel 11. It is desirable that a sealing means that suppresses intrusion of outside air, such as an O ring made of rubber, be further provided between the flange 21 and the flange 36. However, a method for coupling the reaction vessel 11 and the take-out apparatus 30 to each other is not limited to such a method. The reaction vessel 11 and the take-out apparatus 30 may be coupled to each other by causing at least portions of the reaction vessel 11 and the take-out apparatus 30 to be brought into contact with each other, or may be coupled to each other without having portions that are brought into contact with each other. That is, the reaction vessel 11 and the take-out apparatus 30 may be indirectly coupled to each other by causing a coupling jig, a hood, or the like, to be interposed therebetween.

The housing vessel 31 is a member that houses the conveyance mechanism 13 that is pulled out from the reaction vessel 11. It is desirable that the housing vessel 31 be constituted of a material that allows the housing vessel 31 to contact with a substance to be treated or a product adhering to the conveyance mechanism 13 to be housed in the housing vessel 31. For example, the housing vessel 31 may be made of a material having corrosion resistance, such as stainless steel or fluororesin. The housing vessel 31 may be made of a material similar to a material used for forming the reaction vessel 11. One side of the housing vessel 31 is connected to the flange 37 by welding or the like, and the other side of the housing vessel 31 is connected to the sealing part 38 by welding or the like. The sealing part 38 is disposed in such a way as to close one of opening parts of the housing vessel 31.

The partition 34 is provided to the cylindrical part 35 disposed between the flange 36 and the flange 37. The partition 34 includes, for example, a valve element that is movable in a direction orthogonal to the shaft of the conveyance mechanism 13. The partition 34 switches a state between the reaction vessel 11 and the housing vessel 31 between an open state and a shut-off state. By closing the partition 34, the space in the housing vessel 31 is shut off from the external space by the partition 34 and the sealing part 38. That is, the partition 34 is a shut-off mechanism that shuts off the space in the housing vessel 31 housing the conveyance mechanism 13 from intrusion of gas from the outside. Provided that the space in the housing vessel 31 can be shut off from the intrusion of gas from the outside, various modes may be adopted in place of the partition 34. Examples of the partition 34 include a slide valve, a gate valve, and other valves.

It is preferable that the housing vessel 31 be expandable/contractable according to the shape of the conveyance mechanism 13. For example, the housing vessel 31 can change the length thereof according to the length of the conveyance mechanism 13. **In** the example shown in Fig. 3, for the housing vessel 31, a bellows is used that is expandable/contractable along the direction of the shaft of the conveyance mechanism 13. The bellows is a hollow member having a cylindrical bellows shape. For the housing vessel 31, a member may be used that is formed of a plurality of cylindrical bodies coupled to each other in a telescope form. The housing vessel 31 may be an elastic member that is expandable/contractable, such as a rubber tube.

The coupling member 32 to be coupled to the conveyance mechanism 13 is provided to the inside of the housing vessel 31. The coupling member 32 may be, for example, a clamping member including an opening/closing member and a clamp screw, the conveyance mechanism 13 being inserted into the opening/closing member, the clamp screw being provided to the opening/closing member. By fastening the clamp screw with the conveyance mechanism 13 inserted into the opening/closing member, the conveyance mechanism 13 is coupled to the clamping member. The coupling member 32 may be configured to be operable by a motor, compressed air, hydraulic pressure, or the like, for example. That is, the coupling member 32 may be a powered member. The coupling member 32 may use a clamp mechanism or the like that clamps the conveyance mechanism 13 by hydraulic pressure or the like, and that fixes the conveyance mechanism 13 by friction. Alternatively, the coupling member 32 may have a structure that can perform actions, such as movement, extension/contraction, or rotation. For example, the coupling member 32 may have a structure in which the conveyance mechanism 13 is inserted into the coupling member 32 and, thereafter, the coupling member 32 is rotated so as to fix the conveyance mechanism 13 to the coupling member 32. A member, such as a hook or a chain, may be interposed between the conveyance mechanism 13 and the coupling member 32.

The coupling member 32 may include a control unit that receives command signals for performing an action, and that controls the action. Command signals may be transmitted by connecting the control apparatus, which controls the reaction apparatus, to the take-out apparatus by wired communication by a cable or the like, or may be transmitted by wireless communication by radio waves, or the like. Command signals may be transmitted by wired or wireless communication via a remote controller.

The coupling member 32 is connected to the sealing part 38 on a side opposite to the reaction vessel 11 side of the housing vessel 31. As shown in Fig. 3, the coupling member 32 is coupled to the conveyance mechanism 13 with the housing vessel 31 being in a contracted state. By bringing the housing vessel 31 into an expanded state from such a state, the coupling member 32 is moved together with the housing vessel 31, and the conveyance mechanism 13 is pulled out from the reaction vessel 11, and is then housed into the inside of the housing vessel 31.

The third fluid supply pipe 331, the inflow valve 332, the third fluid discharge pipe 333, and the discharge valve 334 are included in the third fluid control region 33 in the housing vessel 31. The third fluid control region 33 allows the third fluid to pass through the housing vessel 31. The third fluid supply pipe 331 is provided between the partition 34 and the flange 37 of the cylindrical part 35. The third fluid supply pipe 331 supplies the third fluid to the housing vessel 31. The inflow valve 332 adjusts the flow rate of the third fluid to be supplied from the third fluid supply pipe 331. The third fluid discharge pipe 333 discharges the fluid in the third fluid control region to the outside of the housing vessel 31. The third fluid discharge pipe 333 is provided with the discharge valve 334, which adjusts the discharge amount of the third fluid.

The third fluid supply pipe 331 supplies an inert gas to the inside of the housing vessel 31, for example, to bring the inside of the housing vessel 31 into an inert gas atmosphere. Examples of the inert gas include an argon gas, a helium gas, a nitrogen gas, and other gasses. By bringing the inside of the housing vessel 31 into an inert gas atmosphere as described above, even in a case in which a product having high reactivity remains in adhesion to the conveyance mechanism 13, it is possible to safely take out the conveyance mechanism 13 from the reaction vessel 11. Instead of bringing the inside of the housing vessel 31 into an inert gas atmosphere, the inside of the housing vessel 31 may be brought into a vacuum atmosphere, in which the pressure is equal to or less than the atmospheric pressure, by reducing the pressure in the housing vessel 31. In this case, the take-out apparatus 30 may include a pressure reducing mechanism, such as a rotary pump, a mechanical booster pump, or other pumps, to reduce the pressure in the housing vessel 31. A configuration may be adopted in which, for example, the pressure in the housing vessel 31 is set to an atmospheric pressure or less by the pressure reducing mechanism and, thereafter, an inert gas is pressure-fed to the housing vessel 31 from the third fluid supply pipe 331, and the pressure in the housing vessel 31 is then further set to an atmospheric pressure or less by the pressure reducing mechanism. The above-mentioned operations may be repeated if necessary. With such a configuration, the atmosphere in the housing vessel 31 can be preferably adjusted. The third fluid supply pipe 331 may include a detection apparatus that detects the atmosphere in the housing vessel 31. Examples of the detection apparatus include a pressure gauge, a hygrometer, an oxygen concentration meter, a hydrogen sulfide concentration meter, and the like.

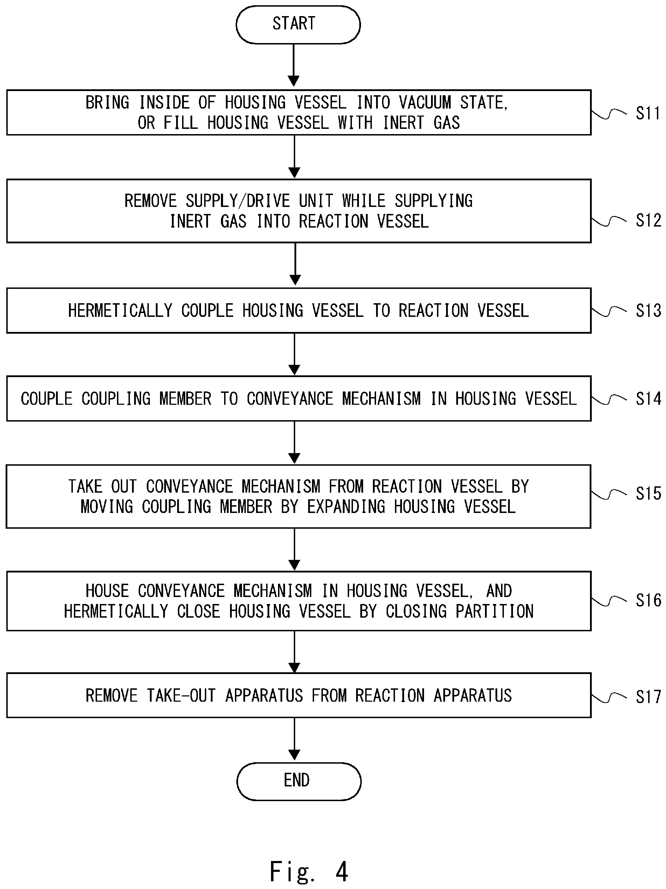

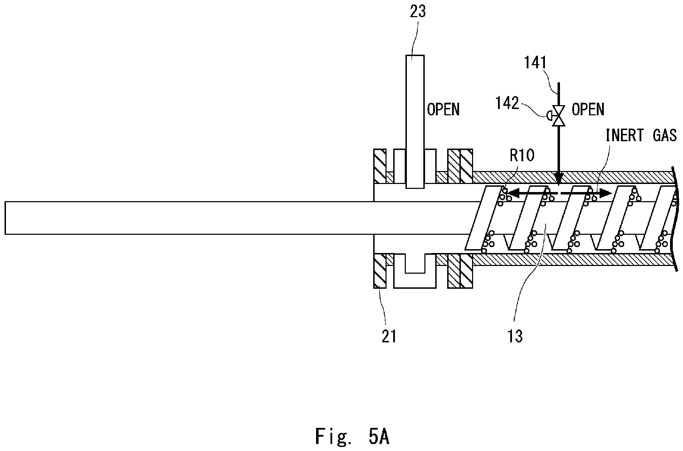

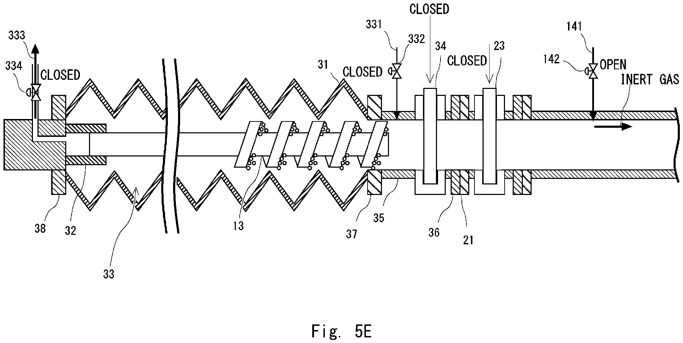

A method for taking out the conveyance mechanism 13 according to the embodiment will be described with reference to Fig. 4 and Fig. 5A to 5F. Fig. 4 is a flowchart illustrating a take-out method according to the embodiment 1. Fig. 5A to 5F are process diagrams illustrating the take-out method according to the embodiment 1.

As shown in Fig. 4, first, the inside of the housing vessel 31 is brought into a vacuum state, or is filled with an inert gas (S11). In the case of filling the inside of the housing vessel 31 with an inert gas, the control apparatus 40 brings the partition 34 into a closed state, and brings the inflow valve 332 and the discharge valve 334 into an open state to supply an inert gas from the third fluid supply pipe 331. In the case of bringing the inside of the housing vessel 31 into a vacuum atmosphere, the control apparatus 40 brings the partition 34 into a closed state, and the pressure in the conveyance mechanism 13 can be reduced by a pressure reducing mechanism not shown in the drawing. Consequently, in connecting the housing vessel 31 to the reaction vessel 11, even when the substance adhering to the conveyance mechanism 13 has high reactivity, it is possible to prevent a situation in which the substance comes into contact with the ambient air and causes a reaction. Accordingly, it is possible to more safely couple the take-out apparatus 30 to the reaction vessel 11.

Next, the supply/drive unit 20 is removed while supplying an inert gas into the reaction vessel 11 (S12). For example, the control apparatus brings the first valve 142 into an open state to supply an inert gas from the first fluid supply pipe 141 to the reaction vessel 11. At this point of operation, the partition 23 is in an open state. The state at this point of operation is shown in Fig. 5A. In the example shown in Fig. 5A, the supply/drive unit 20 is removed, thus bringing about a state in which the left side of the reaction vessel 11 is released.

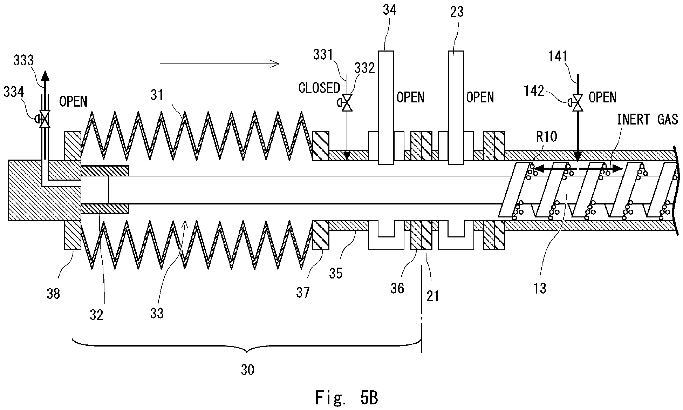

Then, the housing vessel 31 is hermetically coupled to the reaction vessel 11 (S13). To be more specific, the control apparatus 40 brings the first valve 142, the discharge valve 334, and the inflow valve 332 into an open state to supply an inert gas from the first fluid supply pipe 141, and the housing vessel 31 is coupled to the reaction vessel 11 that is in a released state due to removal of the supply/drive unit 20. At this point of operation, the partition 23 and the partition 34 are in an open state, and the inflow valve 332 is in a closed state. A method for hermetically coupling the reaction vessel 11 and the housing vessel 31 to each other is performed by, for example, screwing bolts into the bolt holes of the flange 21 and the bolt holes of the flange 36. The state at this point of operation is shown in Fig. 5B. As shown by an arrow directed toward the right side from the left side in Fig. 5B, the housing vessel 31 is coupled from the left side of the reaction vessel 11. In coupling the housing vessel 31, the portion of the conveyance mechanism 13 that was connected to the supply/drive unit 20 is inserted into the housing vessel 31. The method for hermetically coupling the reaction vessel 11 and the housing vessel 31 to each other is not limited to the above-mentioned method, and other methods may be adopted. Provided that the reaction vessel 11 and the housing vessel 31 are hermetically coupled to without, the reaction vessel 11 and the housing vessel 31 may be indirectly coupled to each other via a jig, a sleeve, or the like without having portions that are brought into contact with each other. Regarding airtightness at the coupling part between the reaction vessel 11 and the housing vessel 31, airtightness may be confirmed by an airtightness test that uses, for example, an inspection gas, such as a nitrogen gas or a helium gas. For example, airtightness may be confirmed by observing non-leakage of an inspection gas at the coupling part between the reaction vessel 11 and the housing vessel 31 when the inspection gas is supplied to the reaction vessel 11 or the housing vessel 31.

As described above, in S11, the inside of the housing vessel 31 is in a vacuum state or in a state filled with an inert gas and hence, even when the flow rate of inert gas supplied from the first fluid supply pipe 141 is insufficient, a possibility of ambient air entering the reaction vessel 11 can be suppressed and hence, it is possible to further increase safety. In a case in which an inert gas supplied in S12 fills the inside of the housing vessel 31, and has a sufficient flow rate of a level that can prevent a substance adhering to the conveyance mechanism 13 from reacting with the ambient air during coupling of the housing vessel 31, step in S11 need not be provided. Thereafter, the housing vessel 31 is hermetically coupled to the reaction vessel 11 (S13).

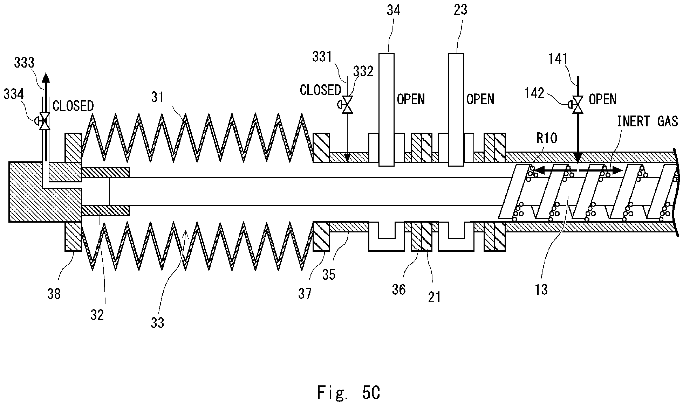

Then, the coupling member 32 is coupled to the conveyance mechanism 13 in the housing vessel 31 (S14). In the case in which a clamping member including an opening/closing member and a clamp screw is used as the coupling member 32, for example, the conveyance mechanism 13 can be coupled to the clamping member by inserting the conveyance mechanism 13 into the opening/closing member, and by fastening the clamp screw. The state at this point of operation is shown in Fig. 5C. As shown in Fig. 5C, when the conveyance mechanism 13 is coupled to the coupling member 32, the discharge valve 334 is in a closed state.

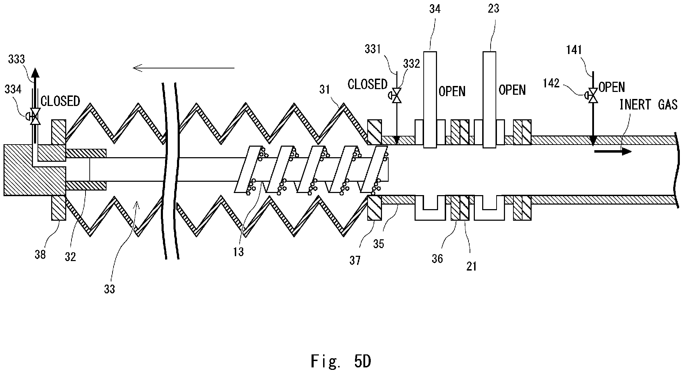

Then, the conveyance mechanism 13 is taken out from the reaction vessel 11 by moving the coupling member 32 by expanding the housing vessel 31 (S15). The state at this point of operation is shown in Fig. 5D. As shown in Fig. 5D, by expanding the reaction vessel 11, the coupling member 32 is moved in a direction shown by an arrow directed toward the left side from the right side. With this movement of the coupling member 32, the conveyance mechanism 13 is taken out from the reaction vessel 11. Thereafter, after the conveyance mechanism 13 is housed in the housing vessel 31, the partition 34 is closed to hermetically close the housing vessel 31 (S16). In addition, the partition 23 is brought into a closed state, so that the space in the reaction vessel 11 is hermetically closed. Consequently, it is possible to prevent a product in the reaction vessel 11 from being exposed to the ambient air.

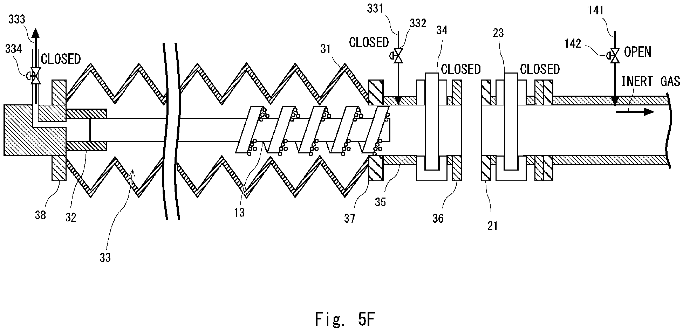

Then, the take-out apparatus 30 is removed from the reaction apparatus 10 (S17). For example, by removing the bolts screwed into the bolt holes in the flange 21 and the bolt holes in the flange 36, coupling between the reaction vessel 11 and the housing vessel 31 is released. The state at this point of operation is shown in Fig. 5F. As described above, according to the embodiment 1, the conveyance mechanism 13 can be housed in the hermetically closed space in the housing vessel 31 without causing the conveyance mechanism 13 to be exposed to the ambient air. Consequently, even when a substance having high reactivity remains in adhesion to the conveyance mechanism 13, it is possible to safely handle the conveyance mechanism 13.

As shown in Fig. 5F, the conveyance mechanism 13 can be cleaned in a state of being housed in the housing vessel 31. That is, the housing vessel 31 may also be used as a cleaning vessel for cleaning the conveyance mechanism 13. For example, in a case in which a compound containing sulfur remains in adhesion to the conveyance mechanism 13, water can be supplied to the inside of the housing vessel 31 with the conveyance mechanism 13 housed in the housing vessel 31. Hydrogen sulfide generated due to a reaction between water and the compound containing sulfur may be discharged through the third fluid discharge pipe 333.

As described above, the coupling member 32 to be coupled to the conveyance mechanism 13 may be provided in a rotatable manner. That is, the coupling member 32 exhibits a function as a rotating mechanism that can rotate the conveyance mechanism 13. For example, with the action of the control unit, the coupling member 32 can rotate the conveyance mechanism 13 coupled to the coupling member 32. In cleaning the conveyance mechanism 13, by rotating the coupling member 32 in the housing vessel 31, it is possible to rotate the conveyance mechanism 13 coupled to the coupling member 32. By rotating the coupling member 32 during cleaning of the conveyance mechanism 13 as described above, it is possible to promote cleaning.

After generation of hydrogen sulfide ceases, water being a cleaning solution is discharged from the inside of the housing vessel 31, and by supplying a dried inert gas from the third fluid supply pipe 331, it is possible to dry the conveyance mechanism 13. Therefore, the housing vessel 31 may include a discharge part for discharging the cleaning solution used for cleaning. The cleaned conveyance mechanism 13 may be taken out to the outside of the housing vessel 31, or may be attached to the reaction apparatus 10 in a state of being housed in the housing vessel 31. As described above, the take-out apparatus 30 of the embodiment is not only used to remove the conveyance mechanism 13, but is also applicable to various other processes, including cleaning of the conveyance mechanism 13.

The take-out apparatus 30 may also include various detection apparatuses that monitor the state in the housing vessel 31. Examples of the various detection apparatuses include a thermometer, a hygrometer, a gas concentration meter that can detect hydrogen sulfide or the like, an imaging apparatus for observing the inside of the housing vessel 31, and the like.

The conveyance mechanism 13 described above ranges from light-weight conveyance mechanisms having a length of approximately 20 to 30 cm to conveyance mechanisms having a length of several meters and a weight of several hundred kilograms. Therefore, when the housing vessel 31 is expanded, it is preferable that the housing vessel 31 be supported. By expanding the housing vessel 31 by a heavy machine for conveyance, such as a crane, with the lower side of the housing vessel 31 supported by a support member, it is possible to move the coupling member 32. That is, the heavy machine for conveyance is a drive mechanism that moves the coupling member. For example, in Fig. 3, the support member (not shown in the drawing), which supports the housing vessel 31, may be provided between the flange 37 of the cylindrical part 35 and the partition 34. By causing a crane to travel to the left side in a state in which the vicinity of the discharge valve 334, disposed on the left of the sealing part 38, is supported by the crane, it is possible to expand the housing vessel 31. Consequently, when the conveyance mechanism 13 is pulled out from the reaction vessel 11, it is possible to support the conveyance mechanism 13 which tends to fall downward.

The heavy machine for conveyance is not limited to a crane, and may be a conveyance carriage or the like including wheels, or may be a winch that winds up a wire via a pulley. A control unit for the heavy machine for conveyance may be synchronized with the control unit provided to the take-out apparatus 30 or with the control apparatus 40 for the reaction apparatus 10, thus being activated via a controller for the reaction apparatus 10 or a controller for the take-out apparatus 30. When the conveyance mechanism 13 has a light weight, the housing vessel 31 may be extended/contracted by manual intervention.

In the embodiment 1, the description has been made for the example in which the center axis of the reaction vessel 11 having a cylindrical shape aligns with the rotary shaft of the conveyance mechanism 13, and the housing vessel 31 is extended/contracted along this shaft. However, the configuration is not limited to such a configuration. The housing vessel 31 can be extended/contracted according to the shape of the conveyance mechanism 13. For example, in a case in which the reaction vessel 11 has a curve, and the conveyance mechanism 13 is curved in conformity with the shape of the reaction vessel 11, the housing vessel 31 may be extended/contracted according to the curve of the conveyance mechanism 13. The cross sectional shape of the reaction vessel 11 is not limited to a circular shape or an elliptical shape. The cross sectional shape of the reaction vessel 11 may be a quadrangular shape, such as a square shape or a rectangular shape, or may be a polygonal shape other than a quadrangular shape.

### <Embodiment 2>

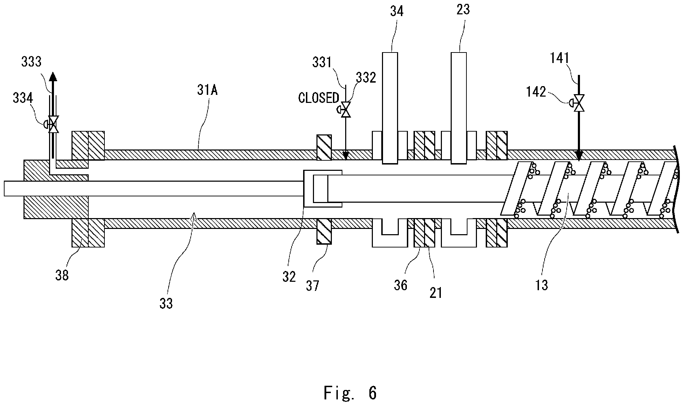

Fig. 6 is a diagram showing a state in which a take-out apparatus according to an embodiment 2 is attached to a reaction apparatus. A point that makes the embodiment 2 different from the embodiment 1 is that the housing vessel 31 is not expandable/contractable. As shown in Fig. 6, a housing vessel 31A is a cylindrical member having a length corresponding to the length of a conveyance mechanism 13. The housing vessel 31A may be made of a material that allows the housing vessel 31A to contact with a substance to be treated or a product adhering to the conveyance mechanism 13 to be housed in the housing vessel 31A, for example, may be made of a material having corrosion resistance, such as stainless steel or fluororesin. The cross sectional shape of the housing vessel 31A is not limited to a circular shape or an elliptical shape. The cross sectional shape of the housing vessel 31A may be a quadrangular shape, such as a square shape or a rectangular shape, or may be a polygonal shape other than a quadrangular shape.

In the example shown in Fig. 6, a coupling member 32 is provided in the housing vessel 31A in a movable manner within a range from the right side to the left side of the housing vessel 31A. The conveyance mechanism 13 is coupled to the coupling member 32 with the coupling member 32 located on the right side in the housing vessel 31A. By moving the coupling member 32 toward the left side in the housing vessel 31 together with the conveyance mechanism 13 after the conveyance mechanism 13 and the coupling member 32 are coupled to each other, it is possible to draw out the conveyance mechanism 13 from a reaction vessel 11.

The present invention is not limited to the above-mentioned embodiments, and may be suitably changed without departing from the gist of the present invention. In the example described above, the take-out apparatus 30 was coupled after the supply/drive unit 20 is removed. However, the configuration is not limited to such a configuration.

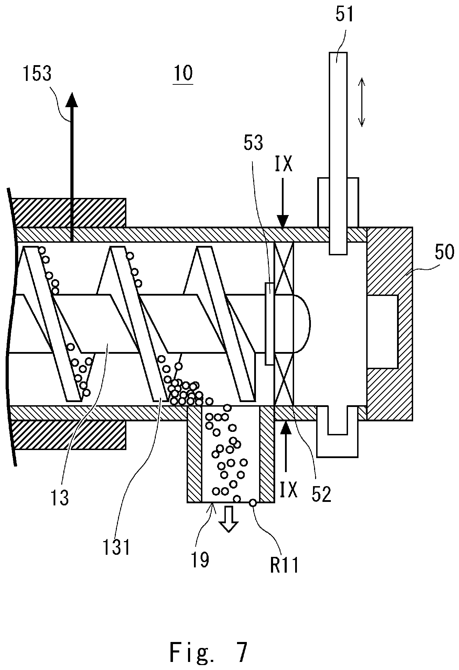

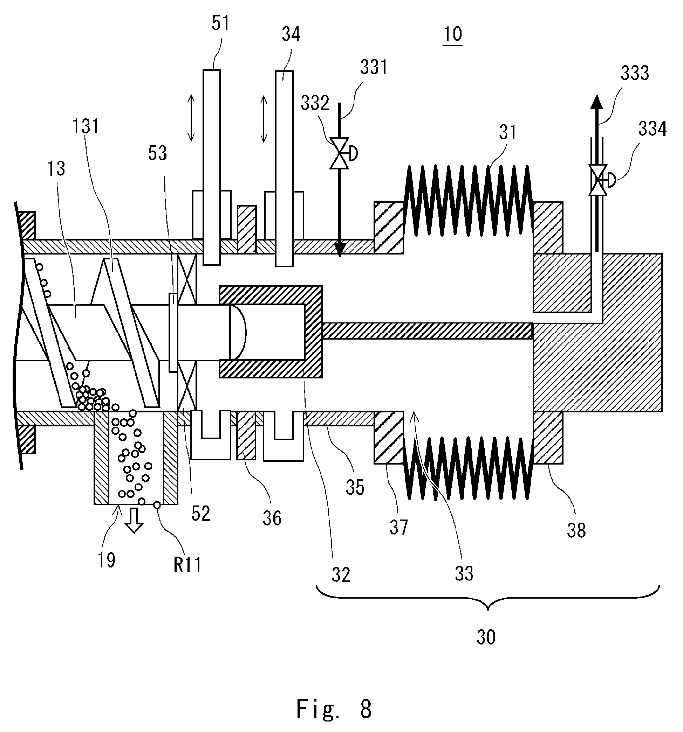

As shown in Fig. 7, for example, a configuration may be adopted in which a lid body 50 which is removable is provided to the reaction vessel 11 on a side on which the delivery port 19 is provided, and the housing vessel 31 is coupled to the reaction vessel 11 from which the lid body 50 is removed. To be more specific, the lid body 50, a partition 51, and a bearing 52 are provided on the delivery port 19 side of the reaction vessel 11. A stopper 53 is provided on the lid body 50 side of the conveyance mechanism 13. The conveyance mechanism 13 is inserted such that the stopper 53 is brought into contact with the bearing 52, and the conveyance mechanism 13 is supported in a rotatable manner. The partition 51 is provided between the lid body 50 and the bearing 52. In this case, in Fig. 8, the housing vessel 31 is coupled to the right side of the reaction vessel 11, and a direction in which the conveyance mechanism 13 is pulled out is the rightward direction.

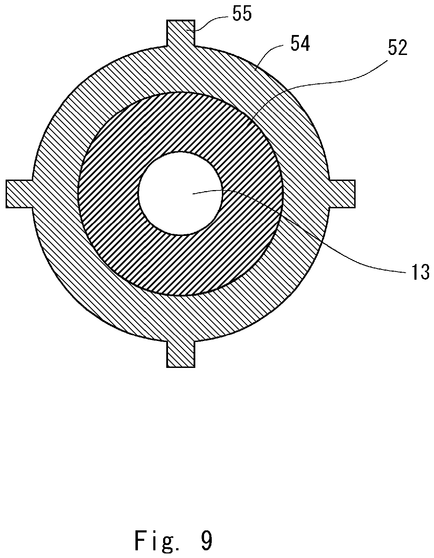

As shown in Fig. 9, a rotation stop member 54 may be provided to the periphery of the bearing 52. The rotation stop member 54 includes protruding parts 55, which are fitted in recessed parts not shown in the drawing provided on the inner periphery of the reaction vessel 11. The rotation stop member 54 prevents the bearing 52 from rotating with rotation of the conveyance mechanism 13. The rotation stop member 54 may have an involute spline shape. When coupling between the housing vessel 31 and the reaction vessel 11 is released after the conveyance mechanism 13 is housed in the housing vessel 31, the partition 51 can be brought into a closed state.

This application claims priority based on Japanese patent application No. 2022-094429 filed on June 10, 2022, and the entire disclosure of which is incorporated herein by reference.

### Reference Signs List

- 10: REACTION APPARATUS
- 11: REACTION VESSEL
- 12: TEMPERATURE CONTROL REGION
- 13: CONVEYANCE MECHANISM
- 14: FIRST FLUID CONTROL REGION
- 15: SECOND FLUID CONTROL REGION
- 16: SUPPLY APPARATUS
- 17: DRIVE APPARATUS
- 18: SUPPLY PORT
- 19: DELIVERY PORT
- 20: SUPPLY/DRIVE UNIT
- 21: FLANGE
- 22: FLANGE
- 23: PARTITION
- 30: TAKE-OUT APPARATUS
- 31: HOUSING VESSEL
- 32: COUPLING MEMBER
- 33: THIRD FLUID CONTROL REGION
- 34: PARTITION
- 35: CYLINDRICAL PART
- 36: FLANGE
- 37: FLANGE
- 38: SEALING PART
- 40: CONTROL APPARATUS
- 41: TEMPERATURE CONTROL UNIT
- 42: FIRST FLUID CONTROL UNIT
- 43: SECOND FLUID CONTROL UNIT
- 44: THIRD FLUID CONTROL UNIT
- 45: CONVEYANCE MECHANISM DRIVE CONTROL UNIT
- 46: OVERALL CONTROL UNIT
- 47: STORAGE UNIT
- 50: LID BODY
- 51: PARTITION
- 52: BEARING
- 53: STOPPER
- 54: ROTATION STOP MEMBER
- 55: PROTRUDING PART
- 131: PROTRUDING PART
- 141: FIRST FLUID SUPPLY PIPE
- 142: FIRST VALVE
- 143: FIRST FLUID DISCHARGE PIPE
- 151: SECOND FLUID SUPPLY PIPE
- 152: SECOND VALVE
- 153: SECOND FLUID DISCHARGE PIPE
- 331: THIRD FLUID SUPPLY PIPE
- 332: INFLOW VALVE
- 333: THIRD FLUID DISCHARGE PIPE
- 334: DISCHARGE VALVE

## Claims

1. A take-out apparatus that takes out a conveyance mechanism from a reaction apparatus including a reaction vessel and the conveyance mechanism, the reaction vessel obtaining a product by causing a reaction of a substance to be treated that is charged into the reaction vessel, the conveyance mechanism being provided in the reaction vessel to convey the substance to be treated, the take-out apparatus comprising:
a housing vessel hermetically coupled to the reaction vessel; and
a coupling member to be coupled to the conveyance mechanism,
wherein the conveyance mechanism is taken out from the reaction vessel by moving the coupling member, and is housed in the housing vessel.

2. The take-out apparatus according to claim 1, wherein the housing vessel includes a portion that is expandable/contractable.

3. The take-out apparatus according to claim 2, wherein
the coupling member is coupled to the conveyance mechanism with the housing vessel being in a contracted state, and
the conveyance mechanism is taken out from the reaction vessel by bringing the housing vessel into an expanded state, and is housed in the housing vessel.

4. The take-out apparatus according to claim 1, further comprising a shut-off mechanism configured to shut off at least a portion of a space in the housing vessel in which the conveyance mechanism is housed.

5. The take-out apparatus according to claim 4, comprising a pressure reducing mechanism configured to allow a reduction in pressure in the housing vessel or an inert gas supply mechanism configured to allow supply of an inert gas into the housing vessel.

6. The take-out apparatus according to claim 1, further comprising a control unit configured to control an action of the coupling member.

7. The take-out apparatus according to claim 4, further comprising a cleaning mechanism configured to clean the conveyance mechanism in a state in which the conveyance mechanism is housed in the housing vessel.

8. The take-out apparatus according to claim 7, further comprising a rotating mechanism configured to be capable of rotating the conveyance mechanism in the housing vessel in cleaning the conveyance mechanism.

9. The take-out apparatus according to claim 1, further comprising:
a support member configured to support the housing vessel; and
a drive mechanism configured to move the coupling member in a state in which the housing vessel is supported by the support member.

10. The take-out apparatus according to claim 1, wherein
the reaction vessel is a cylindrical member having a supply port and a delivery port, the supply port receiving the substance to be treated that is supplied to the reaction vessel, the product being delivered through the delivery port, and
the conveyance mechanism is a screw that extends from a supply port side to a delivery port side of the reaction vessel, and that rotates to convey the substance to be treated, which is supplied from the supply port, toward the delivery port.

11. The take-out apparatus according to claim 10, wherein the housing vessel is expandable/contractable along an axial direction of the screw.

12. A take-out method for taking out a conveyance mechanism from a reaction apparatus including a reaction vessel and the conveyance mechanism, the reaction vessel obtaining a product by causing a reaction of a substance to be treated that is charged into the reaction vessel, the conveyance mechanism being provided in the reaction vessel to convey the substance to be treated, the method comprising the steps of:
hermetically coupling a housing vessel to the reaction vessel;
coupling a coupling member to the conveyance mechanism; and
taking out the conveyance mechanism from the reaction vessel by moving the coupling member, and housing the conveyance mechanism into the housing vessel.
